# EUROPÄISCHE PATENTANMELDUNG

(11) **EP 0 728 568 A1**
(43) Veröffentlichungstag der Anmeldung: **28.08.1996**
(21) Anmeldenummer: 95120178.9
(22) Anmeldetag: 20.12.1995
(51) Int. Cl.: B29C 45/27

(54) **Heisskanaldüse**

(30) Priorität: 22.02.1995 DE 29502937 U
(71) Anmelder: Günther Heisskanaltechnik GmbH, D-35066 Frankenberg/Eder (DE)
(72) Erfinder: Günther, Herbert, Dipl.-Ing., D-35108 Allendorf/Eder (DE)
(74) Vertreter: Olbricht, Karl Heinrich, Dipl.-Phys.

(57) **Zusammenfassung**

Eine Heißkanaldüse (10) mit einem insbesondere band- oder rohrförmigen Heizelement (22), das ein Materialrohr (12) Wärmeleitrohr (27) und samt Zwischenisolierung (26) umschließt, hat an einem Schaft (30) materialführende Düsenspitzen (46), in die Heizstifte (44) ragen. Sie sind mit dem oberen Bereich eines Leitkörpers (40) leitend verbunden, insbesondere verschweißt, der ein gegenüber benachbarten Gehäuse- und Heizelementflächen elektrisch isolierter, jedoch mit dem unteren Heizelement-Ende (23) in einem Schweißbereich (38) leitend verbundener Stahlring (40) sein kann. Der Schweißbereich (38) liegt in einer Winkelzone (W) zwischen zwei Heizstiften (44).

## Beschreibung

Die vorliegende Erfindung betrifft eine Heißkanaldüse gemäß dem Oberbegriff von Anspruch 1.

Typische Vorrichtungen dieser Art sind z.B. in US-A-4 273 525 und in NL-A-7 900 927 beschrieben. Fließfähiger Kunststoff, der einem Materialrohr zugeführt wird, kann darin auf erhöhte Temperatur gebracht und unter hohem Druck in eine Form gespritzt werden. Allgemein haben sich Außenheizungen für das Materialrohr bewährt, unter anderem wie in DE-U-8 039 584 und in DE-A1-2 716 950 offenbart.

Zur Vergleichmäßigung des Temperaturverlaufs im Düsen-Inneren und zur Wärme-Konzentration möglichst nahe am Übergang zum Formnest sind verschiedene Vorschläge gemacht worden; Beispiele hierfür gehen aus EP-B-0 137 888 hervor. Wesentliche Nachteile von individuellen Heizwicklungen und eines weit vorgezogenen Düsenkörpers sind in DE-U-8 618 162 erörtert. Dort will man eine Wärmeableitung zum kalten Werkzeug dadurch herabsetzen, daß die Mündung der Düsenspitze einen Isolier-Abstand zum vordersten Düsenteil hat, der zudem aus schlecht wärmeleitendem Material wie Chromstahl bestehen soll.

Ein konisches Heizelement unmittelbar am Eingußkanal ist laut DE-A1-4 137 720 vorgesehen.

Es ist ein wichtiges Ziel der Erfindung, solche Vorrichtungen weiter zu verbessern und die Wirtschaftlichkeit des insbesondere angußlosen Spritzgießens zu steigern. Dabei sollen gleichzeitig mehrere Artikel oder es soll ein Artikel mehrfach angespritzt werden können.

Hauptmerkmale der Erfindung sind im kennzeichnenden Teil von Anspruch 1 angegeben. Ausgestaltungen sind Gegenstand der Ansprüche 2 bis 9.

Bei einer Heißkanaldüse, die aus einem Materialrohr besteht, das am Kopf mit Anschlußteilen fest verbunden ist, zwischen denen von einander isolierte Stromzuführungen jeweils mit einem Ende eines insbesondere band- oder rohrförmigen Heizelements leitend verbunden sind, welches das Materialrohr samt einer Zwischenisolierung umschließt, und aus einem Schaft der mit einem Gehäuseunterteil sowie mit einer Kappe fest verbunden ist, wobei letztere und/oder das Materialrohr-Ende wenigstens eine materialführende Düsenspitze aufweist, sieht die Erfindung gemäß dem kennzeichnenden Teil von Anspruch 1 vor, daß das untere Heizelement-Ende mit einem Leitkörper elektrisch verbunden ist, der zumindest einen in eine zugeordnete Düsenspitze ragenden Heizstift aufweist. Dadurch ist es möglich, den Heizstrom bis in die Düsenspitze hineinzuführen und auf diese Weise einer Wärmeabfuhr zum kalten Werkzeug hin durch fortgesetzte Wärme-Nachlieferung zu begegnen. Die beheizte Spitze gestattet es, das Material für den zu fertigenden Artikel mit angemessen hoher Temperatur in das Formnest einzubringen.

Gemäß Anspruch 2 ist der Leitkörper ein insbesondere aus Stahl bestehender Verteilring, der gegenüber benachbarten Heizelementflächen elektrisch isoliert, jedoch mit einem oder mehreren Heizstiften elektrisch leitend verbunden ist. Das läßt sich konstruktiv günstig verwirklichen und erlaubt eine schnelle, zuverlässige Montage.

Der Leitkörper kann laut Anspruch 3 gegenüber dem Schaft und der Kappe elektrisch isoliert sein. Diese Ausbildung macht es möglich, den klassischen Aufbau außenbeheizter Heißkanaldüsen mit geringem Platzaufwand beizubehalten.

Wenn nach Anspruch 4 der bzw. jeder Heizstift zumindest mit dem oberen Bereich des Leitkörpers leitend verbunden, insbesondere verschweißt ist, erzielt man elektrische Verbindungen, die den hohen Betriebsbeanspruchungen auch bei langen Gebrauch standhalten. Insbesondere bei Heizelementen, die mit niedriger Spannung von z.B. 5 V betrieben werden, fließen sehr hohe Ströme, so daß es wichtig ist, an den Kontaktstellen niedrige Übergangswiderstände zu gewährleisten.

Zur vorteilhafter Wärmeübertragung trägt die Maßnahme von Anspruch 5 bei, wonach der bzw. jeder Heizstift die Kappe isoliert durchsetzt. Diese wird daher nicht direkt, sondern über die Düsenspitzen beheizt, die gemäß Anspruch 6 mit ihr einstückig oder starr verbunden sind.

Zweckmäßig sind laut Anspruch 7 ebensoviele Heizstifte wie Düsenspitzen vorhanden, vorzugsweise vier, so daß die Mehrfach-Anspritzung an allen Düsenspitzen gleich vorteilhaft stattfinden kann. Dabei ist es günstig, wenn die Düsenspitzen gemäß Anspruch 8 in bezug auf das Materialrohr radialsymmetrisch verteilt sind, namentlich auf einem den Durchmesser der Kappe nicht oder nur geringfügig unterschreitenden Durchmesser. Infolgedessen rücken die Düsenspitzen relativ zum Materialrohr nach außen, wodurch Mehrfach-Anspritzungen auch bei komplizierterer Formgebung leicht durchgeführt werden könne.

Noch ein anderes Merkmal der Erfindung besteht laut Anspruch 9 darin, daß der Schweißbereich sich in einer Winkelzone zwischen zwei Heizstiften befindet, so daß einerseits eine gute leitende Verbindung mit dem unteren Ende des Heizelements und andererseits eine hinreichende Isolierung zu den Heizstiften hin möglich ist. Auch bei kleinen Abmessungen ist daher eine dauerhaft zuverlässige elektrische Verbindung gewährleistet.

Allgemein sieht die Erfindung ferner gemäß Anspruch 10 vor, daß die Heizleistung in den Düsenspitzen über die Stromaufteilung auf die Heizstifte steuerbar ist. Dadurch ist die Möglichkeit gegeben, in Anpassung an den spezifischen elektrischen Widerstand des gewählten Werkstoffes den Heizstift-Durchmesser so zu bemessen, daß die elektrisch parallel liegenden Heizwiderstände die jeweils zugeordneten Düsenspitzen mit der zum Herstellen eines bestimmten Artikels erforderlichen Heizleistung versorgt werden können. Auf einfache Weise lassen sich so im Betrieb an einzelnen Düsenspitzen unterschiedliche Temperaturen erzeugen, was für manche Formgebungen von erheblichem Vorteil sein kann.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnung. Darin zeigen:
- Fig. 1: eine Axialschnittansicht einer Heißkanaldüse,
- Fig. 2: eine Querschnittsansicht entsprechend der Linie II-II in Fig. 1,
- Fig. 3: eine Seitenansicht einer Heißkanaldüse, teilweise im Schnitt,
- Fig. 4: eine Stirnansicht entsprechend der Pfeilrichtung IV von Fig. 3 und
- Fig. 5: ein elektrisches Schaltschema.

Eine insgesamt mit 10 bezeichnete Heißkanaldüse hat ein Materialrohr 12 und einen Kopf 14, der mit einem Gehäuseoberteil 16 verschweißt ist. Das Materialrohr 12 ist von einem Wärmeleitrohr 27 sowie einem Heizrohr 22 mit innerer Isolierung 26 umschlossen. Nachdem ein Stromeinspeisring 17 mit einer Elektrodenbuchse 20 auf das obere Ende des Heizrohrs aufgesetzt und mit ihm leitend verbunden ist, wird mit dem Gehäuseoberteil 16 ein Gehäuseunterteil 18 verschweißt, der seinerseits durch eine Umfangsverschweißung mit einem Schaft 30 verbunden ist.

Letzterer ist am unteren Ende mit Düsenspitzen 46 versehen, in die jeweils ein Heizstift 44 ragt, der eine Kappe 34 durchsetzt und in einem Stahlring 40 elektrisch leitend befestigt ist. Dieser ist an einer Verdickung 38 des unteren Endes 13 des Materialrohrs 12 in einem Schweißbereich 38 elektrisch leitend mit dem unteren Ende 23 des Heizrohrs 22 verbunden. An ausgewählten Stellen hat das Heizrohr 22 Schlitze 24, 25 zur Veränderung des wirksamen Querschnitts derart, daß im Inneren der Heißkanaldüse 10 während des Betriebs eine weitestgehend gleichmäßige Temperaturführung über die gesamte Länge erzielt wird.

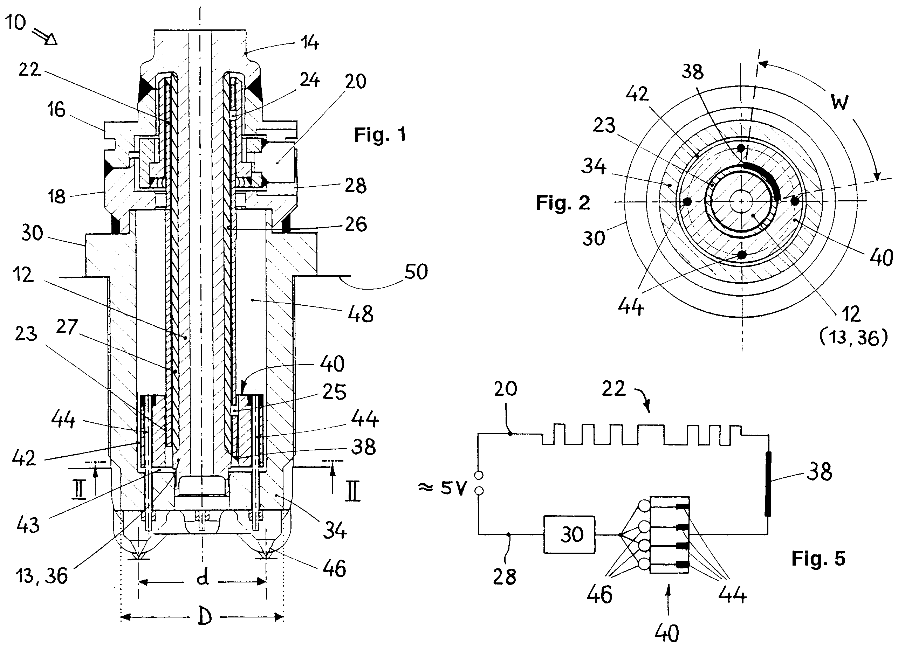

Man erkennt in Fig. 2, daß der Schweißbereich 38 sich über eine Winkelzone W erstreckt, die zwischen zwei Heizstiften 44 verläuft und genügenden Isolierabstand dazu sicherstellt.

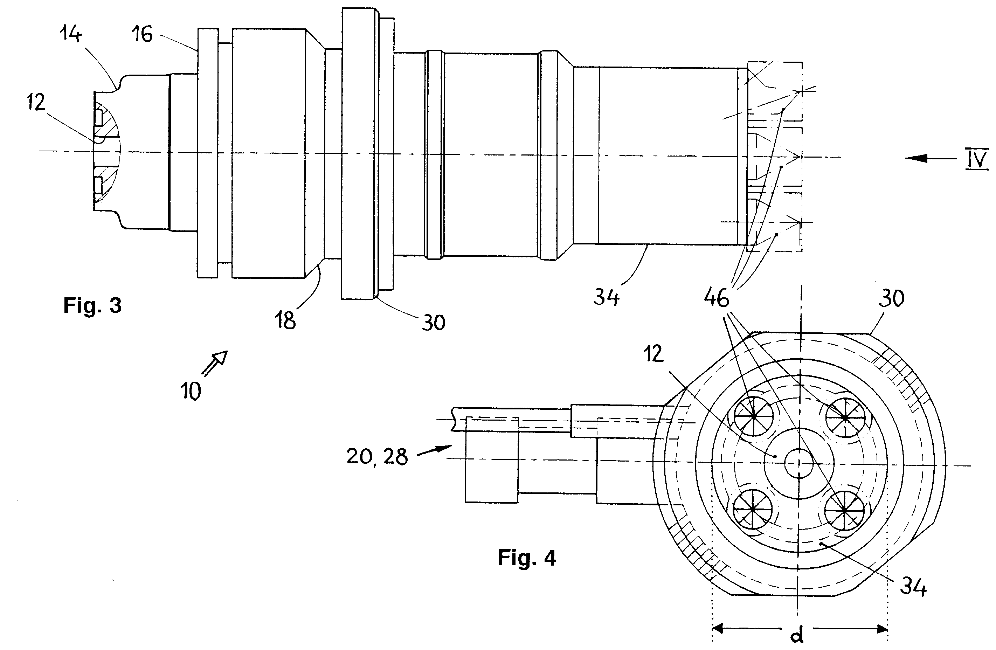

Die Anordnung der Düsenspitzen 46 geht aus Fig. 3 und 4 in Verbindung mit Fig. 1 hervor. Ihre Achsen oder Mittelpunkte liegen auf einem Kreis mit dem Durchmesser d, so daß sich die eigentlichen Spitzen weit außen befinden, ohne daß der Durchmesser D der Kappe 34 überschritten würde. Zugleich ist aus Fig. 4 in Verbindung mit Fig. 1 ersichtlich, daß die Elektrode 20 und eine Gegenelektrode 28 seitlich herausgeführt sind, wobei zu beachten ist, daß die Stromzuführungen 20, 28 in Fig. 1 um 45° gedreht dargestellt sind, um sie sichtbar zu machen. In Fig. 1 ist ferner eine Vorkammerbuchse 50 angedeutet, und man erkennt einen hohlen Isolierraum 48 zwischen Schaft 30 und Heizrohr 22, durch den die Wärmeabfuhr zur Vorkammerbuchse 50 hin stark eingedämmt wird.

Die schematische Darstellung von Fig. 5 läßt erkennen, daß die Stromzuführung über die Elektrode 20 an das hier mäanderförmig gezeichnete Heizelement 22 erfolgt, von dem der Stromfluß über den Schweißbereich 38 an den Stahlring 40 weitergeht. Die mit ihm leitend verbundenen Heizstifte 44 ragen leitend in die Düsenspitzen 46, von denen der Strom über den Schaft 30 und die Gegenelektrode 28 zurückfließt. Daraus ist ersichtlich daß man mit einfachen Mitteln die gewünschte Wärmekonzentration im Düsenspitzenbereich ohne schaltungstechnischen Aufwand erzielt.

Die Erfindung ist nicht auf die vorbeschriebenen Ausführungsformen beschränkt; vielmehr sind zahlreiche Abwandlungen möglich. Man erkennt aber, daß eine Heißkanaldüse 10 mit einem insbesondere band- oder rohrförmigen Heizelement 22, das ein Materialrohr 12 samt Wärmeleitrohr 27 und Zwischenisolierung 26 umschließt, an einem Schaft 30 materialführende Düsenspitzen 46 hat, in die Heizstifte 44 ragen. Sie sind mit dem oberen Bereich eines Leitkörpers 40 leitend verbunden, insbesondere verschweißt, der ein gegenüber benachbarten Gehäuse- und Heizelementflächen elektrisch isolierter, jedoch mit dem unteren Heizelement-Ende 23 in einem Schweißbereich 38 leitend verbundener Stahlring 40 sein kann. Der Schweißbereich 38 liegt in einer Winkelzone W zwischen zwei Heizstiften 44. Zweckmäßig sind vier mit der Kappe 34 einstückige oder starr verbundene Düsenspitzen 46 auf einem den Durchmesser D der Kappe 34 nicht oder nur geringfügig unterschreitenden Durchmesser d radialsymmetrisch verteilt.

Sämtliche aus den Ansprüchen, der Beschreibung und der Zeichnung hervorgehenden Merkmale und Vorteile, einschließlich konstruktiver Einzelheiten und räumlicher Anordnungen, können sowohl für sich als auch in den beliebiger Kombination erfindungswesentlich sein.

### Bezugszeichenliste

- d: Durchmesser
- D: Durchmesser
- W: Winkelzone
- 10: Heißkanaldüse
- 12: Materialrohr
- 13: unteres Ende
- 14: Kopf
- 16: Gehäuseoberteil
- 17: Stromeinspeisring
- 18: Gehäuseunterteil
- 20: Elektrode(nbuchse)
- 22: Heizrohr
- 23: unteres Ende
- 24, 25: Schlitze
- 26: Isolierung
- 27: Wärmeleitrohr
- 28: Gegenelektrode
- 30: Schaft
- 34: Kappe
- 36: Verdickung
- 38: Schweißbereich
- 40: Verteilring
- 42, 43: Isolierungen
- 44: Heizstifte
- 46: Düsenspitzen
- 48: Isolierraum
- 50: Vorkammerbuchse

## Patentansprüche

1. Heißkanaldüse (10), bestehend aus einem Materialrohr (12), das am Kopf (14) mit Anschlußteilen (16; 18) fest verbunden ist, zwischen denen voneinander isolierte Stromzuführungen (20; 28) jeweils mit einem Ende eines insbesondere band- oder rohrförmigen Heizelements (22) leitend verbunden sind, welches das Materialrohr (12) samt einer Zwischenisolierung (26) umschließt, und aus einem Schaft (30), der mit einem Gehäuseunterteil (18) sowie mit einer Kappe (34) fest verbunden ist, wobei letztere und/oder das Materialrohr-Ende (13) wenigstens eine materialführende Düsenspitze (46) aufweist, dadurch **gekennzeichnet,** daß das untere Heizelement-Ende (23) mit einem Leitkörper (40) elektrisch verbunden ist, der zumindest einen in eine zugeordnete Düsenspitze (46) ragenden Heizstift (44) aufweist.

2. Heißkanaldüse nach Anspruch 1, dadurch **gekennzeichnet,** daß der Leitkörper ein insbesondere aus Stahl bestehender Verteilring (40) ist, der gegenüber benachbarten Heizelementflächen elektrisch isoliert, jedoch mit einem oder mehreren Heizstiften (44) elektrisch leitend verbunden ist.

3. Heißkanaldüse nach Anspruch 1 oder 2, dadurch **gekennzeichnet,** daß der Leitkörper (40) gegenüber dem Schaft (30) und der Kappe (34) elektrisch isoliert ist.

4. Heißkanaldüse nach einem der Ansprüche 1 bis 3, dadurch **gekennzeichnet,** daß der bzw. jeder Heizstift (44) zumindest mit dem oberen Bereich des Leitkörpers (40) leitend verbunden, insbesondere verschweißt ist.

5. Heißkanaldüse nach einem der Ansprüche 1 bis 4, dadurch **gekennzeichnet,** daß der bzw. jeder Heizstift (44) die Kappe (34) durchsetzt.

6. Heißkanaldüse nach einem der Ansprüche 1 bis 5, dadurch **gekennzeichnet,** daß die bzw. jede Düsenspitze (46) mit der Kappe (34) einstückig oder starr verbunden ist.

7. Heißkanaldüse nach einem der Ansprüche 1 bis 6, dadurch **gekennzeichnet,** daß ebensoviele Heizstifte (44) wie Düsenspitzen (46) vorhanden sind.

8. Heißkanaldüse nach Anspruch 6 oder 7, dadurch **gekennzeichnet,** daß die Düsenspitzen (46) in bezug auf das Materialrohr (12) radialsymmetrisch verteilt sind, namentlich auf einem den Durchmesser (D) der Kappe (34) nicht oder nur geringfügig unterschreitenden Durchmesser (d).

9. Heißkanaldüse nach einem der Ansprüche 2 bis 8, dadurch **gekennzeichnet,** daß der Schweißbereich (38) sich in einer Winkelzone (W) zwischen zwei Heizstiften (44) befindet.

10. Heißkanaldüse nach einem der Ansprüche 1 bis 9, dadurch **gekennzeichnet,** daß die Heizleistung in den Düsenspitzen (46) über die Stromaufteilung auf die Heizstifte (44) steuerbar ist, namentlich durch deren Materialauswahl und Bemessung.
